# EUROPEAN PATENT APPLICATION

(11) **EP 1 764 702 A1**
(43) Date of publication of application: **21.03.2007**
(21) Application number: 05743183.5
(22) Date of filing: 28.04.2005
(51) Int. Cl.: G06F 13/00, G06F 13/14

(54) **METHOD AND SYSTEM FOR IDENTIFYING USB DEVICES**

(30) Priority: 30.04.2004 CN 200410023977
(71) Applicant: Shandong New Beiyang Information Technology Co., Ltd., Hi-tech Delp. Zone Weihai, Shandong 264200 (CN)
(72) Inventor: QIU, Haibo, Weihai, Shandong 264200 (CN); WANG, Guoqiang, Weihai, Shandong 264200 (CN); ZHANG, Tao, Weihai, Shandong 264200 (CN)
(74) Representative: Kopf, Korbinian Paul
(86) International application number: PCT/CN2005/000589
(87) International publication number: WO 2005/106683

(57) **Abstract**

The present invention provides a method and a system for identifying USB devices. The system includes USB interfaces, and the USB devices have a nonvolatile memory unit. When multiple USB devices are initially connected to the system, the system configures the multiple USB devices such that the USB devices each have a fixed identification, which is irrelevant to the interface that the USB device configured with the identification is connected to and the connection sequence when the USB device is attached to the system subsequently.

## Description

### Field of the Invention

The present invention relates to a method of interconnecting or transmitting information or other signals between Input/Output (I/O) devices and Central Processing Unit (CPU), and more particularly, to a method and a system for identifying USB devices.

### Background of the Invention

As there are more and more computers supporting USB interface technique and Windows platform is widely used, USB interfaces are employed more and more widely. There are more and more peripheral devices utilizing USB interface, such as printers, digital cameras, scanners, and hard disks, etc., in the computer peripheral equipment market. USB has major advantages including high data transmission rate and reliable data transmission between computers and devices, support for hot plug and play, and flexible interface connection, etc.

As for support from Operating System (OS) platform, the entire Windows family, including Windows 98, Windows 2000, and Windows XP, etc., supports USB interface, except for Windows NT. As there are more and more computer peripheral devices with USB interface, it is required for computers to have higher and higher USB interface support capability. The existing computers usually support 2 USB interfaces or even up to 8 USB interfaces. More and more users have raised the demand for using multiple USB devices of the same type on Windows platform. For example, in post or telecommunication business halls, there is often a demand for attaching two USB printers of the same model to a single computer, wherein one printer is used to print foreground user inquiry information, and the other printer is used to print background data statistics information; similarly, since the printer vendors usually presume that only one printer is attached to a single platform when they provide their products to users, the following problem will occur when a user attempts to attach multiple USB printers of the same model from the same printer vendor to the Windows platform:

1. A driver provided by a vendor doesn't support two or more USB printers of the same model. Some printer vendors indicate explicitly in the design that two or more USB printers of the same model cannot be attached to the same Windows platform. That case not only limits the utilization of computer resources but also cannot meet the users' application demand.

2. Even though the driver supports multiple USB printers of the same model, the reliability is poor, and the multiple printers cannot be identified and distinguished reliably. For example, in the case that two USB printers of the same model are attached to two USB interfaces and two printer drivers are correspondingly installed, the printer drivers cannot match the originally designated printers during initial installation when the two printers are exchanged with each other, and the print result will be output to the other printer. However, the user or the application program cannot distinguish that case during application.

3. A printer vendor usually produces USB printers of different models; wherein, each printer model requires specific printer driver, port monitor program, and USB device driver. If specific port monitor program and USB device driver have to be provided for each printer model, it is quite inconvenient for the maintenance.

In conclusion, there is no complete and reliable method to identify and distinguish multiple USB devices of the same model on Windows platform, and thereby the users' application demands cannot be met.

### Summary of the Invention

The present invention intends to overcome the technical problems in the prior art, such as, that multiple USB devices of the same type attached to a Windows platform cannot operate reliably and are difficult to be used and maintained.

The USB devices described in the specification refer to devices with USB interface, for example, printers with USB interface.

In one aspect of the present invention, there is provided a method for identifying USB devices in a computer system, the system including:
interfaces that are capable of being connected to USB devices with nonvolatile memory units; and
a USB device driver that drives the USB devices;
wherein the method includes:
when multiple USB devices are initially connected to corresponding interfaces in the system, the system configures the multiple USB devices such that the USB devices each have a fixed identification, which is irrelevant to the interface that the USB device configured with the identification is connected to and the connection sequence when the USB device is attached to the system subsequently.

In another aspect of the present invention, there is provided a computer system that is capable of identifying USB devices, the computer system including:
USB interfaces for connecting USB devices (2) with nonvolatile memory units;
a USB device driver (5) for driving the USB devices (2);
Wherein:
   the system further includes a module (1); when multiple USB devices (2) are initially connected to corresponding interfaces in the system, the module (1) configures the multiple USB devices (2) by the USB device driver (5) such that the USB devices each have a fixed identification, which is irrelevant to the interface that the USB device configured with the identification is connected to and the connection sequence when the USB device is attached to the system subsequently.

With the method for identifying USB devices provided in the present invention, multiple identical or different USB devices can be accurately identified and applied.

The present invention has the following advantages:

1. The USB device identification method provided in the invention can meet the demand for using multiple USB devices of the same type on a Windows platform. Therefore, it ensures the feasibility and reliability of using multiple USB devices of the same type on Windows platform.

2. The USB device identification method provided in the invention ensures the correspondence between USB devices and their drivers, bringing convenience to operation and application. For example, in case that multiple USB printers are attached, the printing content can be sent to the designated printer correctly and reliably, no matter how the physical USB interfaces are switched.

3. The USB device identification method provided in the invention is helpful to reduce the cost in development and maintenance of USB devices. For example, only one suit of USB port monitor program and USB device driver is required for all types of USB printers from the same vendor; therefore, it can provide great convenience to the developers' maintenance work, the users' application, and the upgrade of the driver.

### Brief Description of the Drawings

Fig.1 is a schematic diagram of the principle of the method for identifying and distinguishing multiple USB devices according to an embodiment of the present invention.

Fig.2 is a schematic diagram of the principle for identifying and configuring multiple USB printers according to an embodiment of the present invention;

Fig.3 is a schematic diagram of the correspondence between printer drivers, printer ports, and printers according to an embodiment of the present invention;

Fig.4 is a flow diagram of realizing USB device dynamic identification according to an embodiment of the present invention;

Fig.5 is a flow diagram of device ID configuration according to an embodiment of the present invention;

Fig.6 is a flow diagram of installing and configuring printer drivers and printer ports according to an embodiment of the present invention;

Fig.7 is a flow diagram of device ID dynamic configuration according to an embodiment of the present invention.

### Detailed Description of the Embodiments

Embodiment 1:

The embodiments of the present invention will become better understood with respect to the following detailed description with USB printers as an example.

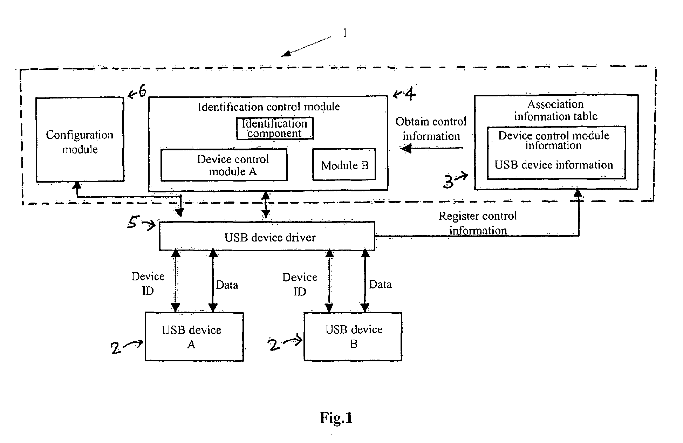

Fig.1 shows a system that identifies the USB devices attached thereto, and the operating principle of the system is as follows: the system includes USB interfaces adapted to connect USB devices that have nonvolatile memories (not shown). When multiple USB devices 2 are initially connected to the system, the configuration module 6 configures the multiple USB devices 2 each with an appropriate fixed identification, which is irrelevant to the connecting position and connecting sequence of the USB device configured with the identification when the USB device is attached to the system subsequently. When the multiple USB devices 2 with fixed identifications are connected to the system, the identification control module 4 can identify the USB devices 2 correctly; in addition, the identifications are irrelevant to the connecting positions and sequences of the USB devices 2 when they are attached to the system. Specifically, the identification control module 4 (here integrated in module 1) maintains an association information table 3 in the computer by retrieving data from the memory units of USB devices 2; when an USB device 2 is connected to the computer, the USB device driver 5 writes the device information (e.g., device ID) into the association information table 3; the identification component in the identification control module 4 obtains the control information related to the current designated USB device 2 from the association information table 3; with the device information obtained by the identification component, the computer invokes the corresponding device control module in the identification control module 4; the device control module establishes a communication connection to the corresponding USB device 2 in accordance with the device information and sends information such as data, etc., from the computer to said the corresponding USB device 2 or receive the data from the USB device 2.

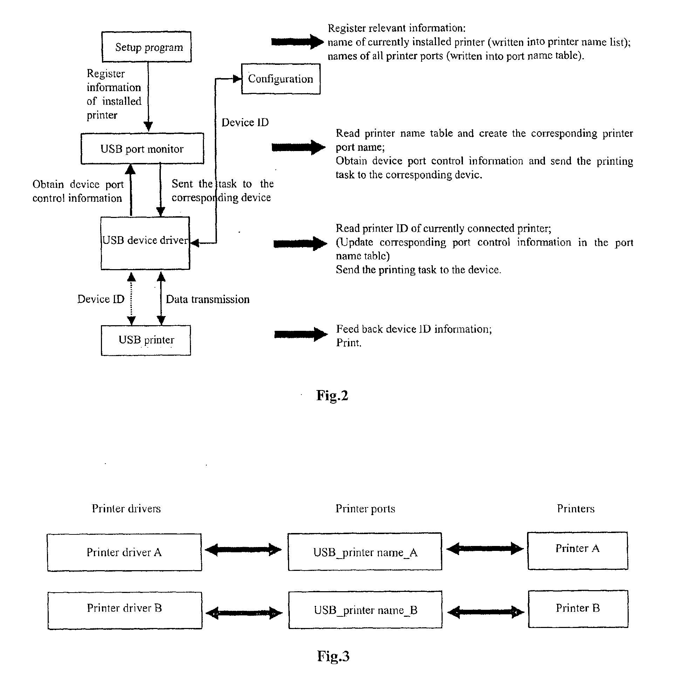

The schematic diagram in Fig.2 shows the functions implemented by the modules and the relationship between the modules in the identification method. The identification method includes the following two steps: a setup program and a configuration tool are mainly adapted to implement device ID configuration function; the setup program installs the printer driver module and configures information such as USB port used by the driver, so that the application software (driver), the USB port used, and the USB device match to each other. Due to the fact that one byte in the readable/writable memory unit can store up to 255 device IDs, the above identification method is applicable to multiple USB printers, depending on the size of the readable/writable memory unit. The USB device driver and the USB port monitor program shown in Fig.2 are mainly adapted to implement device identification function. Hereunder the steps of the identification method is described in details

The steps of the identification method are as follows:

For convenience of description, here two printers of the same model are taken as an example: both the printers have the default device IDs as A.

1) One of the printers is configured with device ID as B by the configuration software or the setup program, while the other printer is kept with default device ID as A.

2) The printer drivers and the printer ports are configured and installed by the setup program.

The printer drivers that use USB port A and USB port B respectively, i.e., printer driver A and printer driver B, are installed. If there are more printers, they are installed in the same way.

Now, printer driver A is associated with USB port A and printer A; and printer driver B is associated with USB port B and printer B. That is, the devices and the application software (drivers) are mapped to each other, as shown in Fig.3.

3) When either of the printer, e.g., printer A, is connected to the computer, the USB device driver obtains the device ID information from the connected printer, and then creates corresponding device control information, and registers the information in the system, so that printer A is associated with USB port A, and thereby the printer, the designated USB port, and the printer driver are mapped to each other. When another printer of the same model with a different printer ID is connected, relevant device information will be registered for the corresponding USB port.

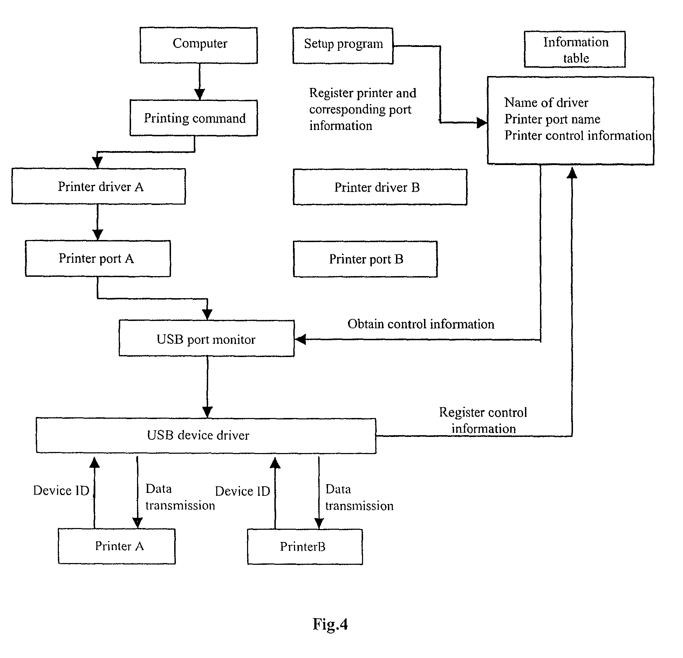

When printer A is connected to any interface in the computer, the USB device driver can always identify the printer by retrieving the device ID information, and thereby register the correct control information in the system. That is, dynamic identification of USB devices is implemented. The process flow is shown in Fig.4.

4) In case that the system is connected with two or more printers of the same model (with different device IDs), suppose the computer is to use printer A for file printing, the computer will invoke printer driver A to create the print task; since the printer driver A was associated with USB port A when the printer driver was initially installed, the print server sends the print task created by printer driver A to USB port A, as indicated in step 1 in Fig.4.

5) According to the device information registered in the above step 3, the USB port monitor program sends the print task to printer A but not to printer B, as indicated in step 2 in Fig.4.

The configuration method mentioned in step 1) of the above identification method is described as follows; wherein, the configuration is a static configuration; for example, the steps for configuring two or more printers are as follows:

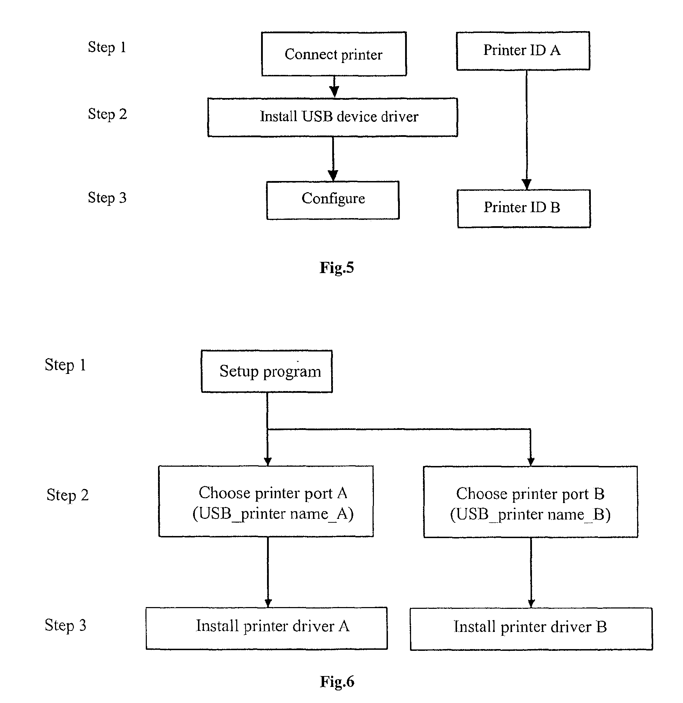

1) Device IDs are configured, as shown in Fig.5.

1: A printer is connected to the computer; the default device ID of the printer is A;

2: A USB device driver is installed. When an USB printer is connected to the computer, the system will launch the USB device driver installation wizard automatically; the USB device driver can be installed under the guidance of the wizard (the USB device driver is only needed to be installed once) ;

3: The computer configures the printer with a printer ID. It is noted that in order to distinguish printers, a unique ID should be chosen for the printer. The printer is disconnected from the computer, and identify the current printer with the corresponding ID by labeling or with any other method;

4. Steps 1-3 are repeated to configure all printers.

2) Printer drivers are installed and printer ports are configured, as shown in Fig.6.

1: The printer driver setup program is ran;

2: Relevant printer parameters are set; when setting the printer port, a port name with prefix "USB" is chose; for example, the port is named as USB_printer name_A when the driver for printer A is installed; the installation of printer driver A is completed;

3: Steps 1-2 is repeated to install the printer driver for printer B; wherein the port is named as USB_printer name_B; and the installation of printer driver B is completed. The printer drivers for more printers may be installed sequentially with the same method.

Now, the printer drivers, the printer ports, and the printers are installed and configured, and mapped to each other.

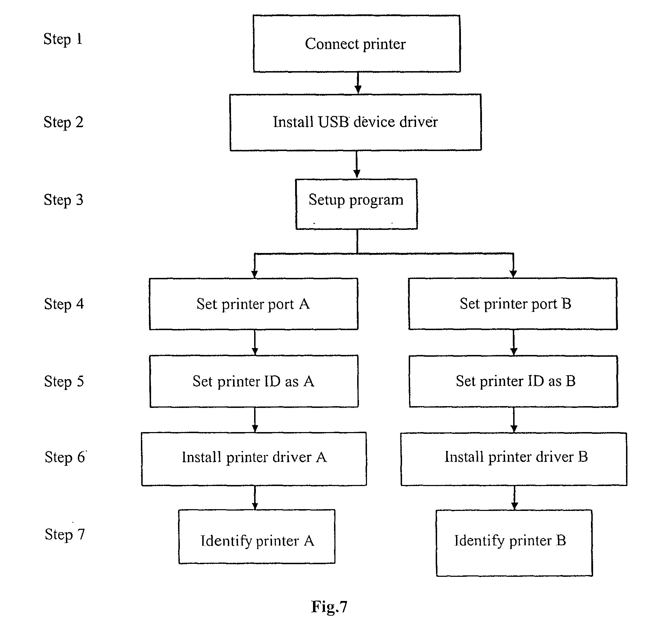

As shown in Fig.7, the configuration method implements unified installation and configuration process; printer ID configuration is completed during the installation process. For any printer, this method can be used to install and configure printer driver, printer port, and printer and establish the correspondence between them.

Embodiment 2:

This embodiment differs from embodiment 1 in that: dynamic configuration is employed in the configuration steps in this embodiment; the steps of dynamic configuration is as follows:

1: A printer is connected to the computer;

2: A USB device driver is installed. When an USB printer is connected to the computer, the system will launch the USB device driver installation wizard automatically; the USB device driver can be installed under the guidance of the wizard (the USB device driver is only needed to be installed once);

3: The printer driver setup program is ran;

4. Relevant printer parameters are set; when setting the printer port, a port name with prefix "USB" is chose; for example, the port is named as USB_printer name_A when the driver for the first printer is installed; when the next printer is installed, an port name different to USB_printer name_A is chose; for example, the port is named as USB_printer name_B;

5: During the installation process, the computer implements device ID configuration function, that is, it configures the currently connected printer with a printer ID. For example, the ID of the printer with port name as USB_printer name_A is set as A, and the ID of the printer withport name as USB_printer name_B is set as B, and so on;

6: The installation of relevant printer driver is completed after the configuration is completed. Then the printer is disconnected. If the port name is USB_printer name_A in step 4, the currently installed printer driver will be printer driver A; if the port name is USB_printer name_B, the currently installed printer driver will be printer driver B, and so on;

7: If the port name is USB_printer name_A in step 4, the printer is identified as printer A. The steps 1-6 are repeated to install and configure the required printers, printer ports, and drivers.

The present invention has been described in the embodiments as above. According to an embodiment of the present invention, there is provided a method for identifying USB devices in a system attached with USB devices; the system includes a computer and USB devices. Wherein, the computer is provided with an identification component, a device control module, an identification module, a USB device driver, and an association information table; the computer implements the USB device dynamic identification by means of the correspondence between USB device, USB port, and device control module as well as USB device control information obtained dynamically.

The identification method includes the following steps:

1. The configuration module configures a USB device with a USB device ID by accessing the memory unit in the USB device, and establishes and maintains an association information table in the computer;

2. When the USB device is connected to the computer, the USB device driver writes the information (e.g., device ID) into the association information table;

3. The identification component in the computer obtains relevant control information for the current designated USB device in accordance with the information in the association information table;

4. The computer invokes the corresponding device control module in accordance with the device information obtained by the identification component;

5. The device control module in the computer establishes a communication connection to the corresponding USB device in accordance with the device information, and sends the information such as data from the computer to the USB device or receiving data returned from the USB device.

The above step 1) includes: the user accesses the memory unit in the USB device and configures the USB device with the device ID by means of the identification module or the setup program. Relevant information such as the device ID is stored in the readable/writable memory unit in the USB device which is necessary for the USB device. The user can create and maintain the association information table by installing the device driver. The creation of the association information table and the dynamic retrieval of the device information ensure close association between other application programs in the computer and the USB device. A unified naming rule is used during the creation of the association information table so as to kept the name of device control module in application programs consistent to the name of the USB device and avoid confusion.

The configuration method in the above step 1) and the association information table in the above step 2) are a prerequisite for coexistence of multiple USB devices on a Windows platform as well as reliable identification and distinguish by the application programs.

The above step 3) includes: when the USB device is connected to the system, the USB device driver writes the device information (e.g., device ID) of the current attached USB device into the association information table, so as to implement reliably identification of the USB device. Whenever an USB device is connected to the system, the USB device driver obtains the device ID information thereof and registers corresponding device information in accordance with the device ID.

The above step 4) includes: the identification component in the computer retrieves the information from the association information table, and obtains the relevant control information for the current designated USB device in accordance with the correspondence between the device control module and the USB device.

In the above step 3), in case that multiple USB devices of the same type are connected, the multiple USB devices can share the same USB device driver; in that way, the USB device driver can assign different device information for the USB devices in accordance with the device IDs; in addition, the assigned device information is independent to physical interfaces in the computer system; therefore, reliable identification and distinguish of the multiple USB devices of the same type are achieved by means of the correspondence.

The names of the USB device, the USB port, and the device control module are mapped to each other and named consistently, so that the user can identify and distinguish them easily.

The configuration process in step 1 of the identification method includes a static configuration process or a dynamic configuration process.

Static configuration is to configure the USB device ID, the device identification component, and the device control module respectively with a separate configuration tool. Dynamic configuration simplifies the configuration process by completing configuration of the USB device ID, the device identification component, and the device control module in one-off operation with the setup program before the USB device is used; in addition, the USB device can be used once it is configured.

The static configuration includes the following steps:

1) Connecting an USB device to the computer;

2) Installing the USB device driver;

3) The computer configuring the USB device with a device ID;

4) Disconnecting the USB device, and identifying the current USB device with the corresponding ID by labeling or with any other method;

5) The computer running the setup program to configure the device identification component and the device control module.

The dynamic configuration includes the following steps:

1) Connecting an USB device to the computer;

2) Installing the corresponding USB device driver;

3) The computer running the setup program to configure the device identification component and the device control module and to implement device ID setting function, i.e., to configure the currently connected USB device with a device ID.

With the USB device identification method according to the embodiments of the present invention, multiple identical or different USB devices can be identified and applied.

The present invention has the following advantages:

1. The USB device identification method provided in the embodiments of the present invention can meet the demand for using multiple USB devices of the same type on a Windows platform. Therefore, it ensures the feasibility and reliability of using multiple USB devices of the same type on a Windows platform.

2. The USB device identification method provided in the embodiments of the present invention ensures the correspondence between USB devices and their drivers, bringing convenience to operation and application. For example, in case that multiple USB printers are attached, the printing content can be sent to the designated printer correctly and reliably, no matter how the physical USB interfaces are switched.

3. The USB device identification method provided in the present invention is helpful to reduce the cost in development and maintenance of USB devices. For example, only one suit of USB port monitor program and USB device driver is required for all types of USB printers from the same vendor; therefore, it can provide great convenience to the developers' maintenance work, the users' application, and the upgrade of the driver.

It is noted that the computer mentioned in the description belongs to a wide concept, which covers any device that has CPU(s) and supports connection(s) with USB device(s).

In addition, the above embodiments are described by examples in which multiple identical USB devices (e.g., printers) are connected to a computer; however, those skilled in the art should understand that the same principle is also applicable to the case that different USB devices are connected.

Though the present invention has been described in, but not limited to, the preferred embodiments as above. Those skilled in the art may easily make various explications and variations to the embodiments, without departing from the spirit of the present invention. For example, the spirit of the present invention is also applicable to the case that a computer is attached with different USB devices. However, any of such explications or variations shall fall into the protected domain of the present invention.

## Claims

1. A method for identifying USB devices in a computer system, the system comprising:
interfaces that are capable of being connected to the USB devices with nonvolatile memory units; and
a USB device driver for driving the USB devices;
wherein the method comprises:
when multiple USB devices are initially connected to corresponding interfaces in the system, the system configures the multiple USB devices such that the USB devices each have a fixed identification, which is irrelevant to the interface that the USB device configured with the identification is connected to and the connection sequence when the USB device is attached to the system subsequently.

2. The method as in claim 1, wherein said configuring the multiple USB devices such that the USB devices each have a fixed identification comprises accessing the nonvolatile memory units in the USB devices.

3. The method as in claim 2, wherein the method further comprises:
establishing association between the USB devices and application programs related to the USB devices in accordance with the identifications that identify the USB devices.

4. The method as in claim 3, wherein the association comprises: the correspondence between the information of a device control module adapted to control the corresponding USB device and the device information of the USB device.

5. The method as in claim 1, wherein the multiple USB devices are identical to each other, or at least one of them is different to others.

6. A computer system that is capable of identifying USB devices, wherein the computer system comprises:
USB interfaces, adapted to connect USB devices (2) with nonvolatile memory units;
a USB device driver (5) for driving the USB devices (2);
wherein:
the system further comprises a module (1); when multiple USB devices (2) are initially connected to the system, the module (1) configures the multiple USB devices (2) by the USB device driver (5) such that the USB devices (2) each have a fixed identification, which is irrelevant to the interface that the USB device configured with the identification is connected to and the connection sequence when the USB device is attached to the system subsequently.

7. The system as in claim 6, wherein the module (1) comprises a configuration module (6), an identification control module (4), and an association table (3); the configuration module (6) is adapted to access the nonvolatile memory units of the multiple USB devices such that the USB devices (2) each have a fixed identification; the association table (3) is adapted to establish the association between the USB devices (2) and the identification control module (4) related to the USB devices (2) in accordance with the device identifications that identify the USB devices; the identification control module (4) is adapted to identify the USB devices with the fixed identifications and to invoke corresponding device control modules in accordance with the association table to control the USB devices.

8. The system as in claim 7, wherein the association comprises: the association between the device control module information of the device control modules adapted to control the corresponding USB devices (2) and the device information of the USB devices.

9. The method as in claim 1, wherein the multiple USB devices are identical to each other, or at least one of them is different to others.
